# EUROPEAN PATENT SPECIFICATION

(11) **EP 3 434 542 B1**
(45) Date of publication and mention of the grant of the patent: **22.04.2020**
(21) Application number: 18185819.2
(22) Date of filing: 26.07.2018
(51) Int. Cl.: B60T 8/17

(54) **FAILSAFE SYNTHETIC ANGLE GENERATION ALGORITHM FOR AIRCRAFT ELECTRIC BRAKING SYSTEM**
AUSFALLSICHERER ALGORITHMUS ZUR ERZEUGUNG EINES SYNTHETISCHEN WINKELS FÜR EIN ELEKTRISCHES BREMSSYSTEM EINES FLUGZEUGS
ALGORITHME DE GÉNÉRATION D'ANGLE SYNTHÉTIQUE À SÉCURITÉ INTÉGRÉE POUR SYSTÈME DE FREINAGE ÉLECTRIQUE D'AVION

(30) Priority: 26.07.2017 US 201715660562
(43) Date of publication of application: 30.01.2019
(73) Proprietor: Goodrich Corporation, Charlotte, NC 28217-4578 (US)
(72) Inventor: MASTROCOLA, Naison E., Goshen, CT Connecticut 06756 (US); MENKE, Michael J., Roscoe, IL Illinois 61073 (US)
(74) Representative: Dehns

(56) References cited:
- EP-A1- 0 716 969
- EP-A1- 3 072 759
- EP-A1- 3 098 126
- US-A1- 2005 082 999

## Description

### FIELD

The present disclosure relates to electric brakes, and, more specifically, to systems and methods for controlling electric brakes.

### BACKGROUND

Aircraft often include one or more landing gear that comprise one or more wheels. A braking system is coupled to the wheel(s) in order to decelerate or park the aircraft. For electric braking systems, a motor may be located at the wheels of the landing gear and a controller is typically located in the fuselage of the aircraft. Wires may extend between the fuselage and the braking system at the location of the wheels. Electric signals may be sent and received between the motor and the controller. US 2005/0082999 A1 describes an electro-mechanical actuator braking apparatus

### SUMMARY

A controller for an electromechanical brake actuator (EBA) is disclosed herein and defined in claim 1. The controller comprises an error detector configured to determine an error in a motor angular position signal, and a synthetic angle generator configured to generate a synthetic motor angular position signal, wherein the controller controls an actuator motor via the synthetic motor angular position signal in response to the error in the motor angular position signal being determined. The motor angular position signal is replaced with the synthetic motor angular position signal in response to the error being determined.

The synthetic motor angular position signal may cause the actuator motor to retract the EBA. The EBA may be disabled in response to the retraction. The synthetic motor angular position signal may comprise a time-varying angular position. The controller may be for an electromechanical brake.

A brake arrangement is disclosed herein and defined in claim 5. The brake arrangement comprises an actuator motor, a controller in electronic communication with the actuator motor, and a tangible, non-transitory memory configured to communicate with the controller, the tangible, non-transitory memory having instructions stored thereon that, in response to execution by the controller, cause the controller to perform operations comprising: receiving, by the controller, a motor angular position signal; determining, by the controller, an error in the motor angular position signal; generating, by the controller, a synthetic motor angular position signal; and replacing, by the controller, the motor angular position signal with the synthetic motor angular position signal in response to the error in the motor angular position signal being determined.

In various embodiments, the operations may further comprise sending, by the controller, a command signal to the actuator motor based upon the synthetic motor angular position signal. The brake arrangement may further comprise a load cell, in communication with the controller, a current sensor, in communication with the controller, and a position sensor, in communication with the controller and configured to output the motor angular position signal. The controller may comprise an error detector and a synthetic angle generator. The error detector may be configured to determine the error and the synthetic angle generator is configured to generate the synthetic motor angular position signal. The brake arrangement may further comprise an electromechanical brake actuator (EBA), wherein the actuator motor is for the EBA. The operations may further comprise rotating a motor shaft in response to the sending, wherein the rotating causes the EBA to retract at an angular velocity corresponding to the synthetic motor angular position signal. The controller may comprise an EBA controller. The controller may disable the actuator motor in response to the sending. The actuator motor may comprise a three-phase motor. The motor angular position signal may be received by the controller from a position sensor.

A method for controlling an electromechanical actuator is disclosed herein and defined in claim 13. The method comprises: receiving, by a controller, a motor angular position signal; determining, by the controller, an error in the motor angular position signal; generating, by the controller, a synthetic motor angular position signal; replacing, by the controller, the motor angular position signal with the synthetic motor angular position signal in response to the error in the motor angular position signal being determined; and sending, by the controller, a command signal to a motor based upon the synthetic motor angular position signal.

In various embodiments, the method may further comprise rotating a motor shaft in response to the controller sending the command signal. The rotating may cause the electromechanical actuator to retract at an angular velocity corresponding to the synthetic motor angular position signal.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

The subject matter of the present invention is particularly pointed out and distinctly claimed in the concluding portion of the specification. A more complete understanding of the present invention, however, may best be obtained by referring to the detailed description and claims when considered in connection with the figures, wherein like numerals denote like elements.
FIG. 1 illustrates an aircraft, in accordance with various embodiments;
FIG. 2A illustrates an aircraft brake, in accordance with various embodiments;
FIG. 2B illustrates a block diagram of an electromechanical brake actuator control system, in accordance with various embodiments;
FIG. 3 illustrates a block diagram of a motor controller, in accordance with various embodiments;
FIG. 4 illustrates a schematic view of a motor in electronic communication with a bridge inverter, in accordance with various embodiments; and
FIG. 5 illustrates a method of operating a motor, in accordance with various embodiments.

### DETAILED DESCRIPTION

All ranges and ratio limits disclosed herein may be combined. It is to be understood that unless specifically stated otherwise, references to "a," "an," and/or "the" may include one or more than one and that reference to an item in the singular may also include the item in the plural.

The detailed description of exemplary embodiments herein makes reference to the accompanying drawings, which show exemplary embodiments by way of illustration. While these exemplary embodiments are described in sufficient detail to enable those skilled in the art to practice the exemplary embodiments of the invention, it should be understood that other embodiments may be realized and that logical changes and adaptations in design and construction may be made in accordance with this invention and the teachings herein. Thus, the detailed description herein is presented for purposes of illustration only and not limitation. The steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

Aircraft often include one or more landing gear that comprise one or more wheels. A braking system is coupled to the wheel(s) in order to decelerate or park the aircraft. For electric braking systems, a motor may be located at the wheels of the landing gear and a controller is typically located in the fuselage of the aircraft. Wires may extend between the fuselage and the braking system at the location of the wheels. Electric signals may be sent and received between the motor and the controller. A position sensor, such as a resolver for example, may be in electronic communication with an actuator motor for an electromechanical brake actuator (EBA). A controller for a brake, as described herein, may monitor the output (e.g., a motor angular position signal) of the position sensor to determine if the output has a fault. In response to the controller determining a fault in the output, the controller may generate a synthetic motor angular position signal whereby the controller operates the actuator motor. In various embodiments, the synthetic motor angular position signal may cause the actuator motor to retract at a predetermined rate in order to disable the EBA from applying pressure to a brake stack (failsafe position off the brake). In this regard, systems and methods, as described herein, may prevent uncommanded braking from occurring in response to a faulty position sensor. Systems and methods, as described herein may allow for an EBA to be retracted to a failsafe condition without feedback from a position sensor.

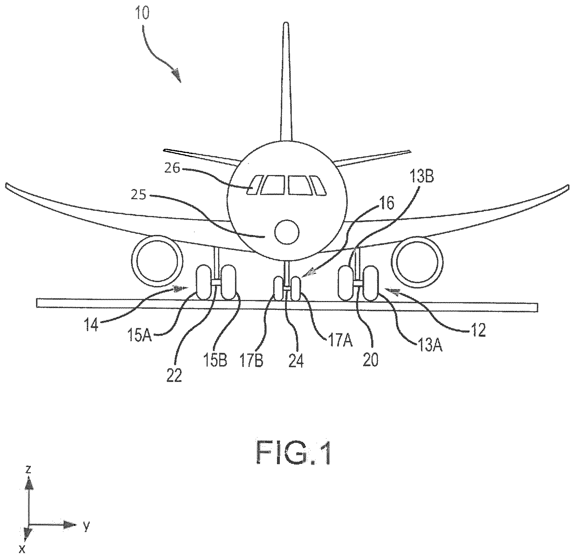

With reference to FIG. 1, an aircraft 10 in accordance with various embodiments may include landing gear such as landing gear 12, landing gear 14 and landing gear 16. Landing gear 12, landing gear 14 and landing gear 16 may generally support aircraft 10 when aircraft is not flying, allowing aircraft 10 to taxi, take off and land without damage. Landing gear 12 may include wheel 13A and wheel 13B coupled by an axle 20. Landing gear 14 may include wheel 15A and wheel 15B coupled by an axle 22. Landing gear 16 may include nose wheel 17A and nose wheel 17B coupled by an axle 24. The nose wheels differ from the main wheels in that the nose wheels may not include a brake and/or a wheel speed transducer. An XYZ axes is used throughout the drawings to illustrate the axial (y), forward (x) and vertical (z) directions relative to axle 22. Aircraft 10 may comprise a controller 25 and pilot controls 26. Landing gear system 14 may be in communication with controller 25 and/or pilot controls 26 and may receive commands from controller 25 and/or pilot controls 26, for example, to apply pressure to a brake stack.

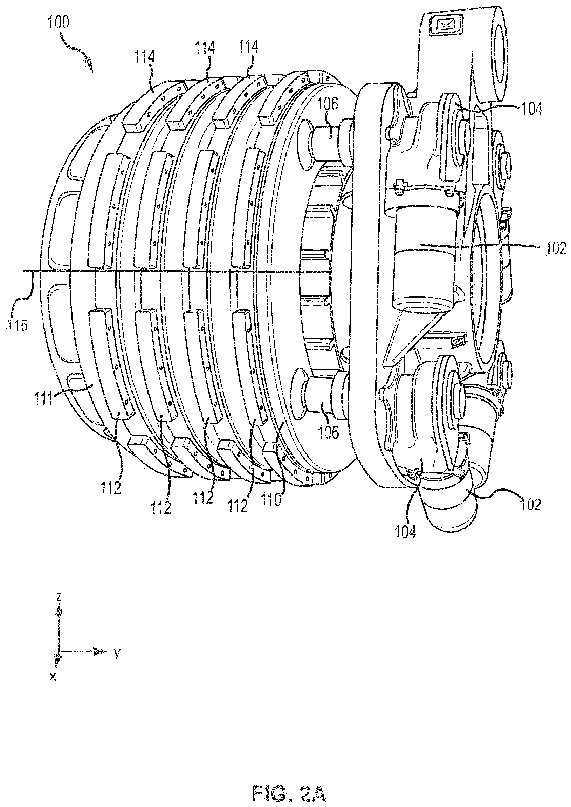

FIG. 2A illustrates an aircraft brake 100 in accordance with various embodiments. Aircraft brake 100 may include a plurality of actuator motors 102, a plurality of electromechanical brake actuators 104, a plurality of ball nuts 106, an end plate 111 and a pressure plate 110, and a plurality of rotating discs 112 and stators 114 positioned in an alternating fashion between end plate 111 and pressure plate 110. Rotating discs 112 may rotate about an axis 115 and the stators 114 may have no angular movement relative to axis 115. Wheels may be coupled to rotating discs 112 such that a linear speed of the aircraft is proportional to the angular speed of rotating discs 112. As force is applied to pressure plate 110 towards end plate 111 along the axis 115, rotating discs 112 and stators 114 are forced together in an axial direction. This causes the rotational speed of rotating discs 112 to become reduced (i.e., causes braking effect) due to friction between rotating discs 112, stators 114, end plate 111 and pressure plate 110. When sufficient force is exerted on rotating discs 112 via pressure plate 110, the rotating discs 112 will stop rotating.

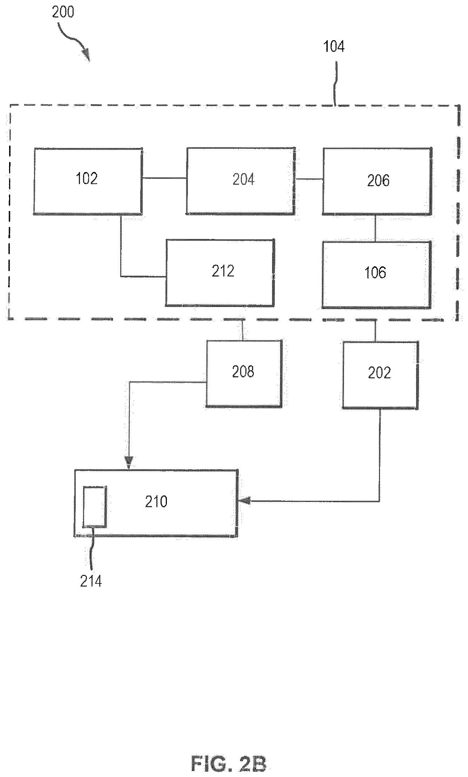

In order to exert this force onto pressure plate 110, actuator motor 102 may cause electromechanical brake actuator (EBA) 104 to actuate. In various embodiments, actuator motor 102 may be a brushless motor, such as a permanent magnet synchronous motor (PMSM), a permanent-magnet motor (PMM) or the like. In various embodiments, and with reference to FIG. 2B, electromechanical brake actuator 104 may be coupled to or otherwise operate a motor shaft 204 and a pressure generating device, such as, for example, a ball screw, a ram, and/or the like. In response to actuation, electromechanical brake actuator 104 causes the motor shaft 204 to rotate. Rotation of the motor shaft 204 may cause rotation of a ball screw 206, and rotational motion of the ball screw 206 may be transformed into linear motion of a ball nut 106. With reference again to FIG. 2A, linear translation of ball nut 106 towards pressure plate 110 applies force on pressure plate 110 towards end plate 111.

Electromechanical brake actuator 104 is actuated in response to current being applied to actuator motor 102. The amount of force applied by electromechanical brake actuator 104 is related to the amount of current applied to actuator motor 102. With reference again to FIG. 2B, in various embodiments, an electromechanical brake actuator control system 200 may comprise a current sensor 212 to detect an amount of current provided to actuator motor 102. Current sensor 212 may be in communication with actuator motor 102 and/or with various other components of an electromechanical brake actuator 104, an electromechanical brake actuator control system 200, and/or an aircraft. In various embodiments, current sensor 212 may be disposed on or adjacent to actuator motor 102. However, current sensor 212 may be disposed in any location suitable for detection of electrical current supplied to the actuator motor 102.

Application of current to actuator motor 102 causes rotation of motor shaft 204. In various embodiments, electromechanical brake actuator control system 200 may comprise a position sensor 208. Position sensor 208 may be configured so as to measure the rotational speed and position of motor shaft 204. In various embodiments, position sensor 208 may be disposed in or adjacent to electromechanical brake actuator 104, or on or adjacent to actuator motor 102. However, position sensor 208 may be disposed in any location suitable for detection of the rotational speed and position of motor shaft 204. In various embodiments, position sensor 208 may comprise a resolver, tachometer, or the like.

In various embodiments, electromechanical brake actuator control system 200 may comprise a load cell 202. Load cell 202 may be configured so as to measure the amount of force being applied between ball nut 106 and pressure plate 110. In various embodiments, load cell 202 may be disposed in or adjacent to electromechanical brake actuator 104, or on or adjacent to ball nut 106. In various embodiments, load cell 202 may be disposed on or adjacent to end plate 111. However, load cell 202 may be disposed in any location suitable for detection of the force being applied between ball nut 106 and pressure plate 110. A controller may receive the detected force and rotational speed, and calculate an adjusted force and an adjusted rotational speed based on those detected values. In various embodiments, electromechanical brake actuator control system 200 may comprise a fault tolerant controller (controller) 210.

In various embodiments, controller 210 may comprise a processor. In various embodiments, controller 210 may be implemented in a single controller. In various embodiments, controller 210 may be implemented in multiple controllers and/or processors. Controller 210 may comprise instructions stored in a tangible, non-transitory memory 214 configured to communicate with controller 210. In various embodiments, controller 210 may be implemented in an electromechanical actuator controller and/or a brake control unit (BCU). In various embodiments, motor 102 may be controlled via controller 210.

System program instructions and/or controller instructions may be loaded onto a non-transitory, tangible computer-readable medium having instructions stored thereon that, in response to execution by a controller, cause the controller to perform various operations. The term "non-transitory" is to be understood to remove only propagating transitory signals per se from the claim scope and does not relinquish rights to all standard computer-readable media that are not only propagating transitory signals per se. Stated another way, the meaning of the term "non-transitory computer-readable medium" and "non-transitory computer-readable storage medium" should be construed to exclude only those types of transitory computer-readable media which were found in In Re Nuijten to fall outside the scope of patentable subject matter under 35 U.S.C. § 101.

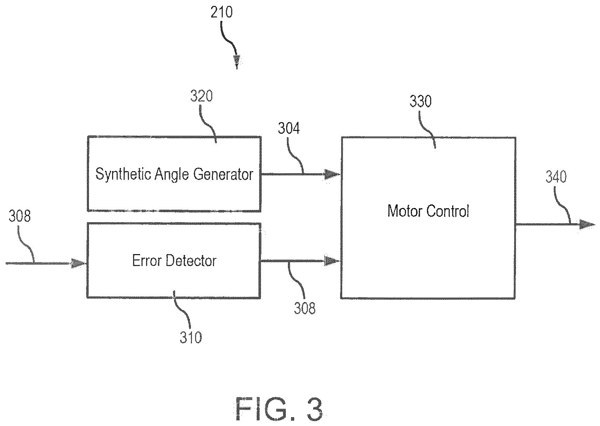

With reference to FIG. 3, controller 210 is illustrated, in accordance with various embodiments. Controller 210 may comprise an error detector 310, a synthetic angle generator 320, and a motor control 330. In various embodiments, error detector 310, synthetic angle generator 320, and motor control 330 may comprise hardware having a tangible, non-transitory memory having instructions stored thereon that cause controller 210 to perform various operations as disclosed herein. For example, error detector 310, synthetic angle generator 320, and motor control 330 may comprise instructions stored in tangible, non-transitory memory 214, with momentary reference to FIG. 2B.

In various embodiments, error detector 310 may receive a motor angular position 308. Motor angular position 308 may be received by position sensor 208, with momentary reference to FIG. 2B. In various embodiments, motor angular position 308 may comprise an angular position (e.g., between -π and π) of motor shaft 204, with momentary reference to FIG. 2B. Error detector 310 may determine if a fault or error is detected in motor angular position 308. When there are no errors determined in motor angular position 308, motor control 330 may generate a motor command signal 340 based upon motor angular position 308. However, if error detector 310 determines an error in motor angular position 308, controller 210 disables motor angular position 308 and replaces it with synthetic motor angular position 304. Motor control 330 may then generate motor command signal 340 based upon synthetic motor angular position 304. In this regard, synthetic angle generator 320 may be activated in response to an error being determined in motor angular position 308.

An error in motor angular position 308 may be determined in accordance with various embodiments. In various embodiments, an error in motor angular position 308 may be determined in response to a position sensor (e.g., position sensor 208 of FIG. 2B) being faulty. In various embodiments, error detector 310 may determine an error in motor angular position 308 in response to a magnitude of motor angular position 308 being outside the bounds of a predetermined threshold. In various embodiments, error detector 310 may determine an error in motor angular position 308 using a hypotenuse method, such as calculating the square root of the sum of the squares of a sine component and a cosine component of the motor angular position 308 (e.g., a demodulated motor angular position 308). However, any manner of determining an error in motor angular position 308 may be useful for the systems and methods disclosed herein.

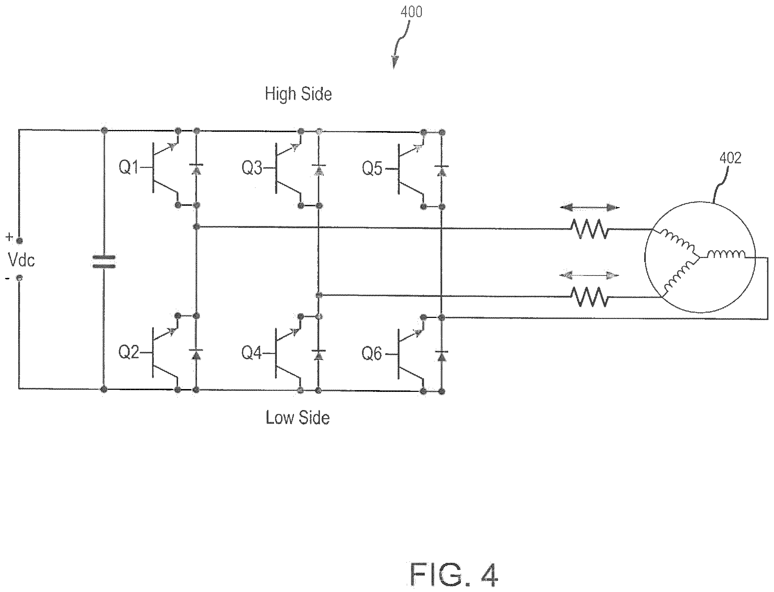

With combined reference to FIG. 3 and FIG. 4, motor control 330 may send motor command signal 340 to bridge inverter 400. Motor command signal 340 may control the transistors (i.e., Q1, Q2, Q3, Q4, Q5, and Q6) in bridge inverter 400, thereby controlling motor 402. As depicted, motor 402 may comprise a three-phase motor. In various embodiments, motor 402 may be similar to actuator motor 102, with momentary reference to FIG. 2A. In various embodiments, bridge inverter 400 may comprise a three phase H-bridge topology.

In various embodiments, with combined reference to FIG. 2A and FIG. 3, synthetic motor angular position 304 may comprise a time-varying angular position which causes an actuator motor 102 corresponding to a faulty position sensor 208 to retract a corresponding electromechanical brake actuator 104 (e.g., retract ball nut 106). The EBA may retract at an angular velocity corresponding to the synthetic motor angular position 304. In this regard, synthetic motor angular position 304 may disable the electromechanical brake actuator 104 and prevent pressure from being applied to a brake stack (e.g., pressure plate 110).

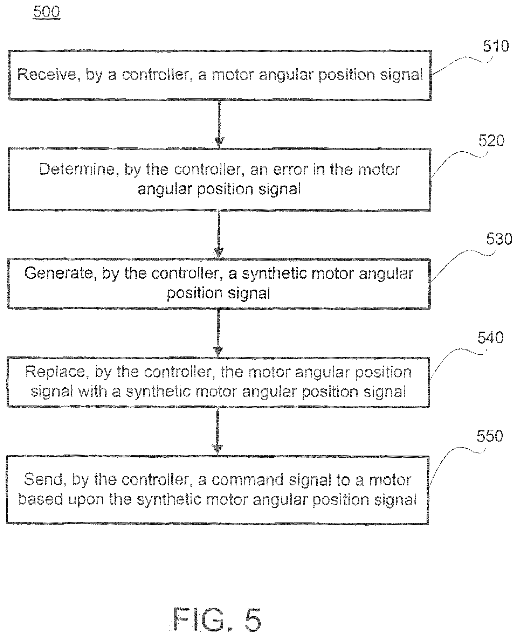

With reference to FIG. 5, a method 500 for controlling a motor is illustrated, in accordance with various embodiments. Method 500 includes receiving, by a controller, a motor angular position signal (step 510). Method 500 includes determining, by the controller, an error in the motor angular position signal (step 520). Method 500 includes generating, by the controller, a synthetic motor angular position signal (step 530). Method 500 includes replacing, by the controller, the motor angular position signal with the synthetic motor angular position signal in response to the error in the motor angular position signal being determined (step 540). Method 500 includes sending, by the controller, a command signal to the motor based upon the synthetic motor angular position signal (step 550).

With combined reference to FIG. 3 and FIG. 5, step 510 may include receiving, by controller 210, motor angular position 308. Step 520 may include determining, by controller 210, an error in the motor angular position 308. Step 530 may include generating, by controller 210, synthetic motor angular position 304. Step 540 includes replacing, by controller 210, motor angular position 308 with synthetic motor angular position 304 in response to the error in motor angular position 308 being determined. Step 550 may include sending, by controller 210, command signal 340 to motor 402 based upon synthetic motor angular position 304.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the invention. The scope of the invention is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the invention in alternative embodiments.

Furthermore, no element, component, or method step in the present invention is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A controller (210) for an electromechanical brake actuator (EBA), comprising:
an error detector (310) configured to determine an error in a motor angular position signal of an actuator motor; and
a synthetic angle generator (320) configured to generate a synthetic motor angular position signal for the actuator motor,
wherein the controller (210) controls the actuator motor via the synthetic motor angular position signal in response to the error in the motor angular position signal being detected, and **characterized in that** the motor angular position signal is replaced with the synthetic motor angular position signal in response to the error being determined.

2. The controller of claim 1, wherein the synthetic motor angular position signal causes the actuator motor to retract the EBA.

3. The controller of claim 2, wherein the EBA is disabled in response to the retraction.

4. The controller of claim 3, wherein the synthetic motor angular position signal comprises a time-varying angular position, and preferably
wherein the controller is for an electromechanical brake.

5. A brake arrangement, comprising:
an actuator motor (102);
a controller (210) in electronic communication with the actuator motor (102); and
a tangible, non-transitory memory configured to communicate with the controller (210), the tangible, non-transitory memory having instructions stored thereon that, in response to execution by the controller (210), cause the controller to perform operations comprising:
receiving, by the controller (210), a motor angular position signal;
determining, by the controller (210), an error in the motor angular position signal;
generating, by the controller (210), a synthetic motor angular position signal; and
**characterized by**
replacing, by the controller (210), the motor angular position signal with the synthetic motor angular position signal in response to the error in the motor angular position signal being determined.

6. The brake arrangement of claim 5, wherein the operations further comprise sending, by the controller, a command signal to the actuator motor based upon the synthetic motor angular position signal, and preferably further comprising:
a load cell (202), in communication with the controller (210);
a current sensor, in communication with the controller (210); and
a position sensor, in communication with the controller and configured to output the motor angular position signal.

7. The brake arrangement of claim 5 or 6, wherein the controller comprises:
an error detector (310); and
a synthetic angle generator (320).

8. The brake arrangement of claim 7, wherein the error detector (310) is configured to determine the error and the synthetic angle generator (320) is configured to generate the synthetic motor angular position signal.

9. The brake arrangement of claim 5, 6, 7 or 8 further comprising an electromechanical brake actuator (EBA), wherein the actuator motor is for the EBA.

10. The brake arrangement of claim 9, wherein the operations further comprise rotating a motor shaft in response to the sending, wherein the rotating causes the EBA to retract at an angular velocity corresponding to the synthetic motor angular position signal.

11. The brake arrangement of claim 9, wherein the controller (210) comprises an EBA controller.

12. The brake arrangement of claim 6, wherein the controller (210) disables the actuator motor in response to the sending, or
wherein the actuator motor comprises a three-phase motor, or
wherein the motor angular position signal is received by the controller (210) from a position sensor (208).

13. A method for controlling an electromechanical actuator, comprising:
receiving (510), by a controller (210), a motor angular position signal;
determining (520), by the controller (210), an error in the motor angular position signal;
generating (530), by the controller (210), a synthetic motor angular position signal;
and **characterized by**
replacing (540), by the controller (210), the motor angular position signal with the
synthetic motor angular position signal in response to the error in the motor angular position signal being determined; and
sending (550), by the controller (210), a command signal to a motor based upon the synthetic motor angular position signal.

14. The method of claim 13, further comprising rotating a motor shaft in response to the controller (210) sending the command signal.

15. The method of claim 14, wherein the rotating causes the electromechanical actuator to retract at an angular velocity corresponding to the synthetic motor angular position signal.

## Patentansprüche

1. Steuerung (210) für ein elektromechanisches Bremsstellglied (EBA), umfassend:
einen Fehlerdetektor (310), der dazu konfiguriert ist, einen Fehler in einem Motorwinkelpositionssignal eines Stellmotors zu ermitteln; und
einen Synthese-Winkelgenerator (320), der dazu konfiguriert ist, ein synthetisches Motorwinkelpositionssignal für den Stellmotor zu erzeugen,
wobei die Steuerung (210) den Stellmotor über das synthetische Motorwinkelpositionssignal als Reaktion auf das Ermitteln eines Fehlers im Motorwinkelpositionssignal steuert und **dadurch gekennzeichnet ist, dass** das Motorwinkelpositionssignal als Reaktion auf das Ermitteln des Fehlers durch das synthetische Motorwinkelpositionssignal ersetzt wird.

2. Steuerung nach Anspruch 1, wobei das synthetische Motorwinkelpositionssignal den Stellmotor veranlasst, das EBA einzufahren.

3. Steuerung nach Anspruch 2, wobei das EBA als Reaktion auf das Einfahren deaktiviert wird.

4. Steuerung nach Anspruch 3, wobei das synthetische Motorwinkelpositionssignal eine zeitvariable Winkelposition umfasst und wobei die Steuerung vorzugsweise für eine elektromechanische Bremse vorgesehen ist.

5. Bremsanordnung, umfassend:
einen Stellmotor (102);
eine Steuerung (210) in elektronischer Verbindung mit dem Stellmotor (102); und
einen materiellen, nichttransitorischen Speicher, der dazu konfiguriert ist, mit der Steuerung (210) zu kommunizieren, wobei der materielle, nichttransitorische Speicher darin gespeicherte Informationen aufweist, die als Reaktion auf eine Ausführung durch die Steuerung (210) die Steuerung veranlassen, Vorgänge auszuführen, umfassend:
Empfangen eines Motorwinkelpositionssignals durch die Steuerung (210);
Ermitteln eines Fehlers im Motorwinkelpositionssignal durch die Steuerung (210);
Erzeugen eines synthetischen Motorwinkelpositionssignals durch die Steuerung (210); und
**gekennzeichnet durch**
Ersetzen des Motorwinkelpositionssignals durch das synthetische Motorwinkelpositionssignal durch die Steuerung (210) als Reaktion auf das Ermitteln des Fehlers im Motorwinkelpositionssignal.

6. Bremsanordnung nach Anspruch 5, wobei die Vorgänge ferner Senden eines Befehlssignals durch die Steuerung an den Stellmotor auf der Grundlage des synthetischen Motorwinkelpositionssignals umfassen, und vorzugsweise ferner Folgendes umfassend:
einen Lastaufnehmer (202) in Verbindung mit der Steuerung (210) ;
einen Stromsensor in Verbindung mit der Steuerung (210); und
einen Positionssensor in Verbindung mit der Steuerung und dazu konfiguriert, das Motorwinkelpositionssignal auszugeben.

7. Bremsanordnung nach Anspruch 5 oder 6, wobei die Steuerung Folgendes umfasst:
einen Fehlerdetektor (310); und
einen Synthese-Winkelgenerator (320)

8. Bremsanordnung nach Anspruch 7, wobei der Fehlerdetektor (310) dazu konfiguriert ist, den Fehler zu ermitteln, und der Synthese-Winkelgenerator (320) dazu konfiguriert ist, das synthetische Motorwinkelpositionssignal zu erzeugen.

9. Bremsanordnung nach Anspruch 5, 6, 7 oder 8, ferner ein elektromechanisches Bremsstellglied (EBA) umfassend, wobei der Stellmotor für das EBA vorgesehen ist.

10. Bremsanordnung nach Anspruch 9, wobei die Vorgänge ferner Drehen einer Motorwelle als Reaktion auf das Senden umfassen, wobei das Drehen das EBA veranlasst, mit einer Winkelgeschwindigkeit einzufahren, die dem synthetischen Motorwinkelpositionssignal entspricht.

11. Bremsanordnung nach Anspruch 9, wobei die Steuerung (210) eine EBA-Steuerung umfasst.

12. Bremsanordnung nach Anspruch 6, wobei die Steuerung (210) den Stellmotor als Reaktion auf das Senden deaktiviert oder
wobei der Stellmotor einen Dreiphasenmotor umfasst oder
wobei das Motorwinkelpositionssignal durch die Steuerung (210) von einem Positionssensor (208) empfangen wird.

13. Verfahren zur Steuerung eines elektromechanischen Stellglieds, umfassend:
Empfangen (510) eines Motorwinkelpositionssignals durch eine Steuerung (210);
Ermitteln (520) eines Fehlers im Motorwinkelpositionssignal durch die Steuerung (210);
Erzeugen (530) eines synthetischen Motorwinkelpositionssignals durch die Steuerung (210);
und **gekennzeichnet durch**
Ersetzen (540) des Motorwinkelpositionssignals durch das synthetische Motorwinkelpositionssignal durch die Steuerung (210) als Reaktion auf das Ermitteln des Fehlers im Motorwinkelpositionssignal; und
Senden (550) eines Befehlssignals durch die Steuerung (210) an einen Motor auf der Grundlage des synthetischen Motorwinkelpositionssignals.

14. Verfahren nach Anspruch 13, ferner umfassend Drehen einer Motorwelle als Reaktion auf das Senden des Befehlssignals durch die Steuerung (210).

15. Verfahren nach Anspruch 14, wobei das Drehen das elektromechanische Stellglied veranlasst, mit einer Winkelgeschwindigkeit einzufahren, die dem synthetischen Motorwinkelpositionssignal entspricht.

## Revendications

1. Dispositif de commande (210) pour un actionneur de frein électromécanique (EBA), comprenant :
un détecteur d'erreur (310) configuré pour déterminer une erreur dans un signal de position angulaire de moteur d'un moteur d'actionneur ; et
un générateur d'angle synthétique (320) configuré pour générer un signal synthétique de position angulaire de moteur pour le moteur d'actionneur,
dans lequel le dispositif de commande (210) commande le moteur d'actionneur par l'intermédiaire du signal synthétique de position angulaire de moteur en réponse à la détection de l'erreur dans le signal de position angulaire de moteur, et **caractérisé en ce que** le signal de position angulaire de moteur est remplacé par le signal synthétique de position angulaire de moteur en réponse à l'erreur en cours de détermination.

2. Dispositif de commande selon la revendication 1, dans lequel le signal synthétique de position angulaire de moteur amène le moteur d'actionneur à rétracter l'EBA.

3. Dispositif de commande selon la revendication 2, dans lequel l'EBA est désactivé en réponse à la rétraction.

4. Dispositif de commande selon la revendication 3, dans lequel le signal synthétique de position angulaire de moteur comprend une position angulaire variant dans le temps, et de préférence
dans lequel le dispositif de commande est destiné à un frein électromécanique.

5. Ensemble frein, comprenant :
un moteur d'actionneur (102) ;
un dispositif de commande (210) en communication électronique avec le moteur d'actionneur (102) ; et
une mémoire tangible non transitoire configurée pour communiquer avec le dispositif de commande (210), la mémoire tangible non transitoire contenant des instructions qui, en réponse à l'exécution par le dispositif de commande (210), amènent le dispositif de commande à effectuer des opérations comprenant :
la réception, par le dispositif de commande (210), d'un signal de position angulaire de moteur ;
la détermination, par le dispositif de commande (210), d'une erreur dans le signal de position angulaire de moteur ;
la génération, par le dispositif de commande (210), d'un signal synthétique de position angulaire de moteur ; et **caractérisé par**
le remplacement, par le dispositif de commande (210), du signal de position angulaire de moteur par le signal synthétique de position angulaire de moteur en réponse à la détermination de l'erreur dans le signal de position angulaire de moteur.

6. Ensemble frein selon la revendication 5, dans lequel les opérations comprennent en outre l'envoi, par le dispositif de commande, d'un signal de commande au moteur d'actionneur sur la base du signal synthétique de position angulaire de moteur, et comprenant en outre de préférence :
une cellule de charge (202), en communication avec le dispositif de commande (210);
un capteur de courant, en communication avec le dispositif de commande (210) ; et
un capteur de position, en communication avec le dispositif de commande et configuré pour émettre le signal de position angulaire de moteur.

7. Ensemble frein selon la revendication 5 ou 6, dans lequel le dispositif de commande comprend :
un détecteur d'erreur (310) ; et
un générateur d'angle synthétique (320).

8. Ensemble frein selon la revendication 7, dans lequel le détecteur d'erreur (310) est configuré pour déterminer l'erreur et le générateur d'angle synthétique (320) est configuré pour générer le signal synthétique de position angulaire de moteur.

9. Ensemble frein selon la revendication 5, 6, 7 ou 8, comprenant en outre un actionneur de frein électromécanique (EBA), dans lequel le moteur d'actionneur est destiné à l'EBA.

10. Ensemble frein selon la revendication 9, dans lequel les opérations comprennent en outre la rotation d'un arbre de moteur en réponse à l'envoi, dans lequel la rotation amène l'EBA à se rétracter à une vitesse angulaire correspondant au signal synthétique de position angulaire de moteur.

11. Ensemble frein selon la revendication 9, dans lequel le dispositif de commande (210) comprend un dispositif de commande EBA.

12. Ensemble frein selon la revendication 6, dans lequel le dispositif de commande (210) désactive le moteur d'actionneur en réponse à l'envoi, ou
dans lequel le moteur d'actionneur comprend un moteur triphasé, ou
dans lequel le signal de position angulaire de moteur est reçu par le dispositif de commande (210) à partir d'un capteur de position (208).

13. Procédé de commande d'un actionneur électromécanique, comprenant :
la réception (510), par un dispositif de commande (210), d'un signal de position angulaire de moteur ;
la détermination (520), par le dispositif de commande (210), d'une erreur dans le signal de position angulaire de moteur ;
la génération (530), par le dispositif de commande (210), d'un signal synthétique de position angulaire de moteur ;
et **caractérisé par**
le remplacement (540), par le dispositif de commande (210), du signal de position angulaire de moteur par le signal synthétique de position angulaire de moteur en réponse à la détermination de l'erreur dans le signal de position angulaire de moteur ; et
l'envoi (550), par le dispositif de commande (210), d'un signal de commande à un moteur sur la base du signal synthétique de position angulaire de moteur.

14. Procédé selon la revendication 13, comprenant en outre la rotation d'un arbre de moteur en réponse à l'envoi par le dispositif de commande (210) du signal de commande.

15. Procédé selon la revendication 14, dans lequel la rotation amène l'actionneur électromécanique à se rétracter à une vitesse angulaire correspondant au signal synthétique de position angulaire de moteur.
